# FASCICULE DE BREVET EUROPEEN

(11) **EP 0 715 111 B1**
(45) Date de publication et mention de la délivrance du brevet: **10.09.1997**
(21) Numéro de dépôt: 95402664.7
(22) Date de dépôt: 27.11.1995
(51) Int. Cl.: F16L 37/084, F16L 33/22

(54) **Dispositif de raccordement rapide d'un tube à un embout rigide**
Schnellverbindungsvorrichtung zum Kuppeln eines Rohres auf einem starren Ansatzstück
Quick connecting device for coupling a tube to a rigid joining part

(30) Priorité: 30.11.1994 FR 9414357
(43) Date de publication de la demande: 05.06.1996
(73) Titulaire: LEGRIS S.A., F-35000 Rennes (FR)
(72) Inventeur: Le Clinche, Pascal, F-35000 Rennes (FR)
(74) Mandataire: Robert, Jean-Pierre

(56) Documents cités:
- WO-A-81/00747
- DE-A- 4 241 817
- DE-U- 9 212 228
- FR-A- 2 705 430
- GB-A- 2 022 747

## Description

La présente invention concerne un dispositif de raccordement rapide d'un tube à un embout rigide.

Il est connu, pour raccorder un tube à une installation ou pour raccorder deux tubes l'un à l'autre, d'utiliser des embouts rigides du type à dents de sapin dans lesquels l'embout rigide possède une partie tubulaire cylindrique équipée sur sa surface extérieure d'aspérités d'accrochage qui retiennent le tube et assurent l'étanchéité de la liaison lorsque cette partie cylindrique est introduite à force à l'intérieur du tube. Le principal inconvénient de ces dispositifs réside dans les difficultés de montage et de démontage. En effet, pour garantir un bon accrochage et une bonne étanchéité, les dents doivent être de hauteur suffisante pour mordre correctement dans la surface intérieure du tube, il s'ensuit qu'un montage à la main devient extrêmement difficile car il faut développer des efforts d'emmanchement importants et le démontage est quasiment impossible du fait de la pénétration des dents dans la paroi du tube et de leur surface pratiquement radiale qui s'oppose à l'effort d'arrachement.

Dans certains cas d'application, il est cependant utile de pouvoir réaliser facilement à la main des raccordements et des déconnexions périodiques d'un tube à un embout rigide. Cette facilité ne peut être obtenue que si l'on diminue sensiblement la hauteur des dents, mais ce au détriment de la qualité de l'accrochage et de l'étanchéité réalisés entre l'embout et le tube.

Pour remédier à cet inconvénient, il est connu de DE-U-9 212 228 de cercler le tube, une fois celui-ci introduit sur l'embout, au moyen d'un collier ou d'une bague placé à l'extérieur du tube et serré sur ce dernier par des moyens appropriés.

Ces dispositifs présentent des qualités mécaniques satisfaisantes mais les opérations de raccordement et de déconnexion réclament encore un certain temps nécessaire à la manoeuvre des moyens de serrage. En outre, lorsque les raccordements et les déconnexions sont fréquentes les empreintes formées de façon répétitive par le collier sur le tube finissent par détériorer la surface extérieure de celui-ci et peuvent conduire à un affaiblissement de l'accrochage du collier de cerclage sur ce tube.

On connaît par ailleurs de FR-A-2 705 430 des dispositifs de raccordement rapide d'un tube à un embout rigide comportant une pièce femelle solidaire de l'embout rigide et une pièce tubulaire mâle équipant l'extrémité du tube à raccorder. La pièce femelle présente un alésage étagé dont une portion de grand diamètre peut accueillir, au-delà d'un verrou axial, un épaulement de la pièce mâle. Le plus souvent, la pièce mâle présente une partie allongée ayant une surface extérieure cylindrique équipée d'aspérités d'accrochage (par exemple en dents de sapin) qui assurent une liaison indémontable du tube avec la pièce mâle.

Avec ce genre de dispositif, le premier raccordement s'effectue en deux étapes. Il faut d'abord emmanché le tube sur la pièce mâle et ce avec un effort d'emmanchement important puisque le serrage doit être suffisamment fort pour assurer l'étanchéité de la liaison. Il faut ensuite introduire la pièce mâle dans la pièce femelle jusqu'à ce que l'épaulement de la pièce mâle ait franchi le verrou axial de la pièce femelle, l'étanchéité de la liaison étant assurée au moyen de joints toriques disposés entre les deux pièces. La déconnexion du tube s'effectue en agissant sur le verrou axial pour désaccoupler la pièce mâle de la pièce femelle.

Ce genre de dispositif permet donc des raccordements et des déconnexions fréquents sans détérioration des qualités mécaniques du raccord formé. Toutefois, la structure en deux pièces mâle et femelle séparées est malcommode à l'usage et le premier raccordement réclame un outillage et une manipulation spécifiques pour l'emmanchement du tube sur la pièce mâle.

La présente invention entend proposer un dispositif de raccordement rapide du type précité, qui présente une structure simple et compacte et qui soit d'une mise en oeuvre extrêmement simple notamment lors du premier raccordement.

En vue de la réalisation de ce but, on prévoit selon l'invention un dispositif de raccordement rapide d'un tube à un embout rigide comportant une pièce femelle solidaire de l'embout rigide et dans laquelle est ménagé un alésage étagé présentant, au-delà d'un verrou axial mobile entre deux positions, une section de grand diamètre, dispositif comportant une bague de cerclage logée de manière amovible dans la section de grand diamètre et équipée sur sa surface intérieure d'au moins une aspérité d'accrochage formant moyen de liaison axiale du tube à la bague de cerclage destinée à mordre la surface extérieure du tube, afin de fixer de façon définitive la bague sur le tube, le verrou axial s'opposant de façon directe, dans une de ses deux positions, au déplacement axial de la bague de cerclage en direction opposée à l'embout rigide et libérant, dans son autre position, la bague de cerclage.

Ainsi, le dispositif se présente sous la forme d'une pièce compacte, la bague de cerclage étant intégrée à la pièce femelle. Lors du premier raccordement, lorsque le tube est introduit dans la pièce femelle, l'aspérité d'accrochage de la bague de cerclage fixe de façon définitive cette bague sur le tube. Cette introduction peut être effectuée manuellement dans la mesure où le serrage de la bague de cerclage sur le tube n'a pas pour fonction d'assurer l'étanchéité, celle-ci étant assurée directement entre la pièce femelle et le tube. Le verrou axial interdit la déconnexion du tube en s'opposant au déplacement axial de la bague de cerclage en direction opposée de l'embout rigide. Pour déconnecter le tube équipé de sa bague de cerclage, il suffit de déverrouiller le verrou axial pour permettre le passage de la bague de cerclage et la déconnexion du tube qui reste équipé de la bague de cerclage. Si l'on souhaite raccorder à nouveau le tube à l'embout, il suffit de faire glisser le tube équipé de sa bague à l'intérieur de la pièce femelle jusqu'à ce que la bague ait dépassé le verrou axial. Après verrouillage de ce dernier, le tube est à nouveau bloqué axialement dans la pièce femelle.

La bague de cerclage peut présenter un alésage conique convergent en direction de l'embout rigide et dont le petit diamètre est inférieur au diamètre extérieur du tube, ou un alésage cylindrique équipé d'au moins une dent d'ancrage.

Selon un mode de réalisation avantageux, la bague de cerclage comporte une bague fendue montée dans une cage qui coopère avec la bague fendue par une surface de contact conique qui diverge en direction de l'embout rigide.

Avantageusement alors, la bague de cerclage comporte un moyen de verrouillage de la bague fendue dans au moins une position axiale de cette bague par rapport à la cage.

D'autres caractéristiques et avantages de l'invention apparaîtront à la lecture de la description qui suit d'un mode de réalisation particulier et non limitatif en liaison avec les figures en annexe, parmi lesquelles :
- la figure 1 est une vue en coupe axiale d'un premier mode de réalisation d'un dispositif de connexion conforme à l'invention ;
- la figure 2 est une vue en coupe selon la ligne II-II de la figure 1 ;
- la figure 3 est une vue analogue à la figure 1 du dispositif en service ;
- la figure 4 est une vue analogue à la figure 1, illustrant le dispositif en état de déconnexion, après un premier raccordement ;
- la figure 5 est une vue de détail en coupe par un plan axial d'une première variante de réalisation de la bague de cerclage ;
- la figure 6 est une vue partielle d'une seconde variante de réalisation de la bague de cerclage, illustrant l'introduction du tube lors du premier raccordement;
- la figure 7 est une vue analogue à la figure 6, illustrant l'état de la bague de cerclage lorsqu'un effort d'extraction est exercé sur le tube ;
- la figure 8 est une vue analogue à la figure 6, illustrant l'état de la bague de cerclage solidaire du tube;
- la figure 9 est une vue analogue à la figure 7 d'une troisième variante de réalisation de la bague de cerclage.

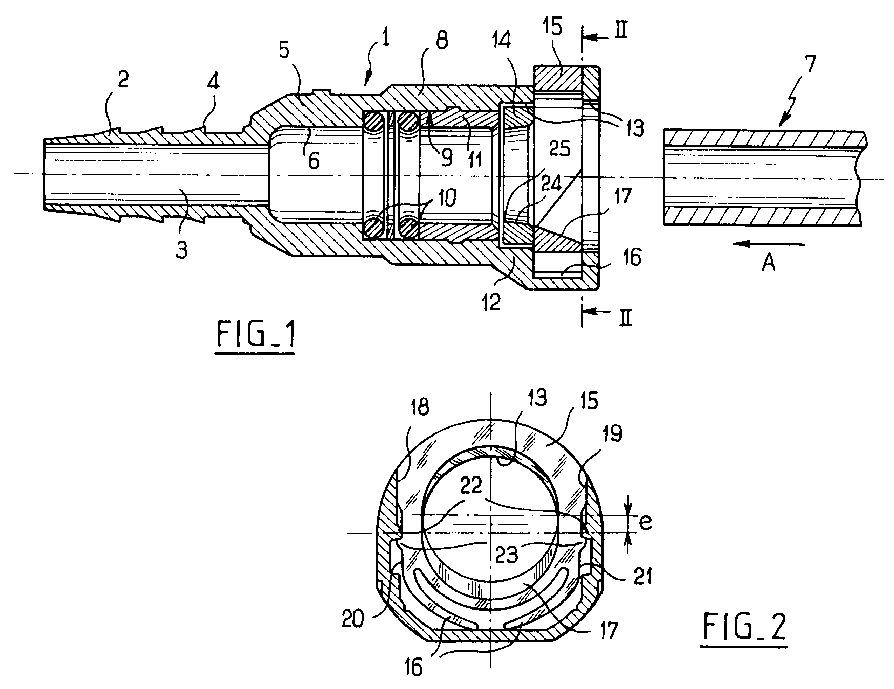

En référence aux figures, et en particulier aux figures 1 à 3, le dispositif de raccordement comporte une pièce femelle 1 réalisée en une pièce avec un embout rigide 2 qui possède un canal intérieur 3 et des moyens extérieurs 4, dits en dents de sapin, pour être introduit à l'intérieur d'un tube non représenté.

En plus de l'embout rigide 2, la pièce femelle 1 est divisée en plusieurs portions. Une première portion 5 comporte un alésage 6 de diamètre déterminé pour accueillir le nez d'un tube 7 à raccorder à l'embout rigide 2. Une deuxième portion 8 de la pièce femelle 1 comporte un alésage 9 de diamètre plus important que l'alésage 6 pour accueillir deux joints toriques 10 et un insert de blocage 11 de ces joints. Le diamètre intérieur de l'insert et celui des joints sont respectivement égal et légèrement inférieur au diamètre de l'alésage 6. Enfin la pièce femelle 1 comporte une troisième portion 12 dont l'alésage 13 a un diamètre encore plus important que celui des alésages précédents pour pouvoir permettre le passage libre d'un bague de cerclage 14.

A son extrémité ouverte sur l'extérieur, c'est-à-dire opposée à l'embout rigide 2, la troisième portion 12 de la pièce femelle 1 comporte un verrou axial pour empêcher l'extraction de la bague 14 lorsqu'elle est introduite correctement dans la pièce femelle 1. Ce verrou est constitué par une bague de verrouillage 15 qui peut coulisser radialement dans un logement ouvert de la pièce femelle 1. Comme cela est mieux visible à la figure 2, la bague de verrouillage 15 comporte deux pattes élastiques extérieures 16 qui tendent à désaxer l'alésage intérieur de la bague de verrouillage 15 par rapport à l'alésage 13. La partie de cet alésage intérieur de la bague de verrouillage 15 qui est située du côté des pattes 16 est en forme de surface conique 17 qui converge vers l'embout rigide 2.

Le logement radial de la bague de verrouillage 15 dans la pièce femelle 1 est représenté à la figure 2. Il est limité latéralement par deux flancs parallèles 18 et 19 contre lesquels sont en appui des méplats 20 et 21 de la bague de verrouillage 15. Les flancs 18 et 19 comportent une saillie 22 qui constitue une butée au coulissement d'une saillie 23 portée par des méplats latéraux 20 et 21 de la bague de verrouillage 15. Ces deux saillies s'opposent ainsi au retrait de la bague de verrouillage 15 à l'extérieur de son logement sous l'effet des pattes élastiques 16 qui maintiennent l'alésage de la bague de verrouillage 15 décalé d'une valeur e par rapport à l'alésage 13. On notera en outre que le matériau utilisé pour la pièce femelle 1 et/ou la bague de verrouillage 15 est suffisamment élastique pour permettre l'introduction de la bague de verrouillage 15 dans son logement avec glissement des saillies 22 et 23, qui sont en dents de sapin, l'une contre l'autre.

La bague de cerclage 14 présente un alésage conique 24 et est disposée à l'intérieur de l'alésage 13 de telle sorte que cet alésage conique converge en direction de l'embout rigide 2. En outre, le petit diamètre de l'alésage conique est légèrement inférieur au diamètre de tube, tandis que le plus grand diamètre est égal ou légèrement supérieur à ce même diamètre. En pratique, les meilleurs performances ont été obtenues pour une surface conique ayant un demi-angle au sommet compris entre 2 et 6°, avec de préférence pour un tube en polyamide un angle de 4°. Pour des tubes de dimensions courantes, c'est-à-dire ayant un diamètre extérieur allant de quelques centimètres à quelques dizaines de centimètres, les meilleurs tenues mécaniques ont été obtenues pour une différence de l'ordre de quelques dizaines de millimètres entre le diamètre extérieur du tube et le plus petit diamètre de la bague de cerclage 14.

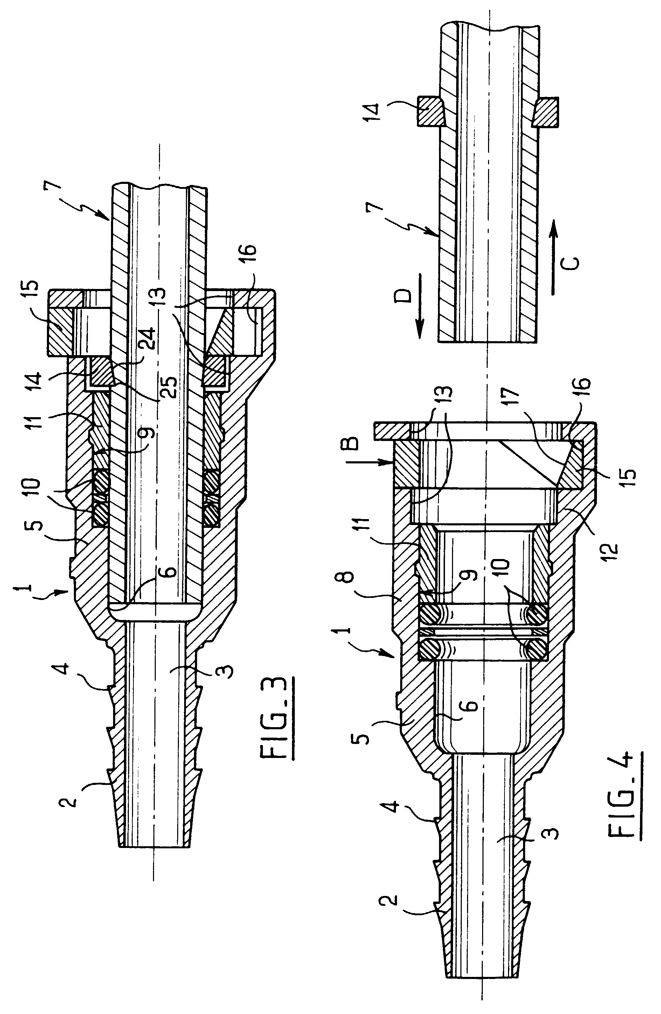

Lors du premier raccordement du tube 7 à la pièce femelle 1, la bague de cerclage 14 est en place à l'intérieur de l'alésage 13. On introduit le tube 7 à l'intérieur de la pièce femelle 1, conformément à la flèche A de la figure 1, en faisant glisser sa surface extérieure contre la surface conique 24 de l'alésage de la bague de cerclage 14, les joints toriques 10, et l'alésage 6. Lorsque le tube 7 parvient en bout de course, le raccordement est achevé. Cet état est illustré par la figure 3.

Pour déconnecter le tube 7 de la pièce femelle 1, il suffit d'appuyer sur la bague de verrouillage 15 à l'encontre des pattes élastiques 16, comme indiqué par la flèche B de la figure 4. La bague de cerclage 14 est alors libérée et le retrait du tube 7 est autorisé, comme cela est illustré par la flèche C.

Pour raccorder à nouveau le tube 7 dans la pièce femelle 1, il suffit de faire pénétrer ce tube avec sa bague de cerclage 14 à l'intérieur de la pièce femelle 1, comme symbolisé par la flèche D. Au passage de la bague de cerclage 14 au travers de la bague de verrouillage 15, la surface conique 17 forme une rampe pour réaligner les axes de l'alésage de la bague de verrouillage 15 et de l'alésage 13, la bague de verrouillage 15 se déplaçant radialement à l'encontre de l'effet des pattes élastiques 16 jusqu'à ce que la bague de cerclage 14 soit logée dans l'alésage 13 au-delà de la bague de verrouillage 15. Les pattes 16 sont alors décomprimées et la bague de verrouillage se retrouve en position libre, c'est-à-dire excentrée par rapport à l'alésage 13 et constitue une butée s'opposant à l'extraction de la bague de cerclage 14. Le raccordement est ainsi achevé et le dispositif se retrouve dans la configuration illustrée par la figure 3.

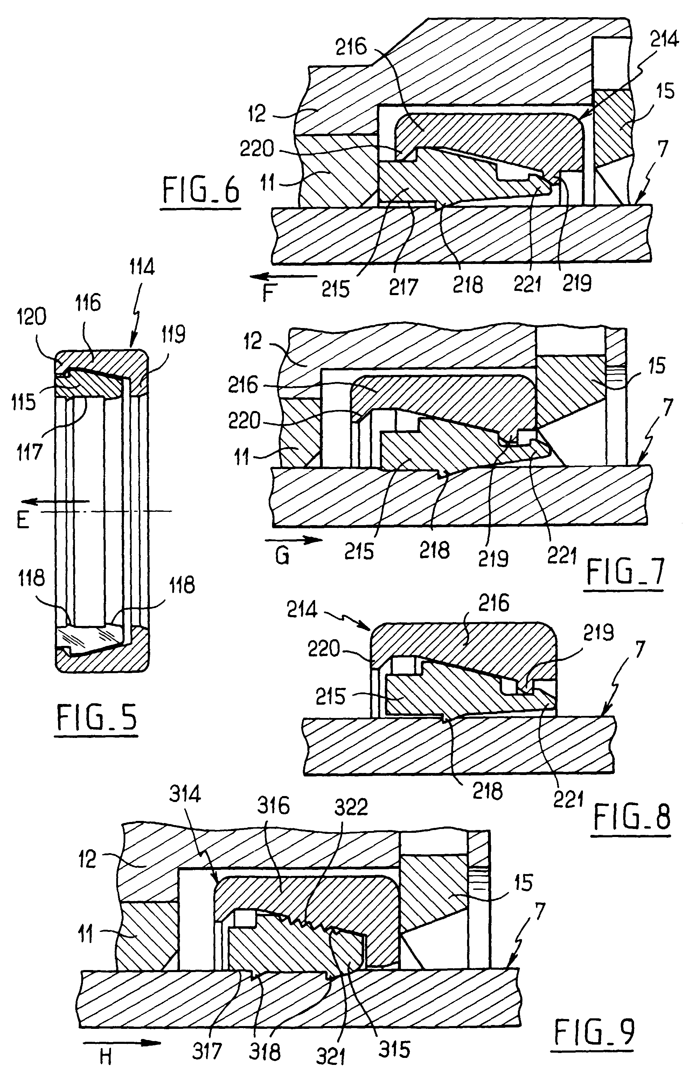

A la figure 5, on a représenté une première variante de réalisation de la bague de cerclage, qui est ici désignée par la référence 114. Cette bague comporte une bague fendue 115 montée dans une cage 116 qui coopère avec la bague 115 par une surface de contact conique qui diverge en direction de l'embout rigide 2. La bague fendue 115 présente en outre un alésage intérieur cylindrique 117 qui est équipé de deux nervures circulaires 118 qui s'étendent en saillie à l'intérieur de la bague 115 avec un diamètre intérieur légèrement inférieur au diamètre extérieur du tube 7. Par ailleurs, la cage 116 présente, à chacune de ses extrémités axiales, des épaulements intérieurs 119 et 120 qui limitent le déplacement axial de la bague fendue 115 à l'intérieur de la cage 116.

Lors d'un premier raccordement du tube à l'embout rigide, le tube est introduit à l'intérieur de la bague de cerclage 114 et glisse contre les nervures circulaires 118 de la bague fendue 115, repoussant cette dernière en direction de l'embout rigide, comme indiquée par la flèche E de la figure 5. Comme la surface de contact entre la bague 115 et la cage 116 est conique, ce déplacement provoque un élargissement de la bague fendue 115, ce qui facilite l'introduction du tube et évite le marquage de la surface extérieure de ce tube par les nervures 118. Après introduction complète du tube dans la pièce femelle du dispositif, toute tentative d'extraction de ce tube contraint la bague fendue 115 à se déplacer en direction opposée de l'embout rigide c'est-à-dire dans le sens inverse de la flèche E. Ce déplacement axial est accompagné, du fait de la conicité de la surface de contact entre la bague 115 et sa cage 116, d'un resserrement de la bague fendue, ce qui tend à renforcer l'accrochage de cette bague sur le tube 7.

Aux figure 6 à 8, on a représenté en vue partielle une seconde variante de réalisation de la bague de cerclage de la figure 5. Cette bague de cerclage est ici désignée par la référence 214 et comporte de même que précédemment une bague fendue 215 montée dans une cage 216. Cette cage 216 est ici équipée de deux épaulements 219 et 220 et la bague fendue 215 présente un alésage intérieure cylindrique 217 équipé d'une dent circulaire 218. La bague fendue 215 comporte de plus un cliquet 221 qui s'avance en porte-à-faux en regard de l'épaulement 219 de la cage 216. Le cliquet 221 a une extrémité arrondie et l'épaulement 220 présente un chanfrein formant une rampe pour cette extrémité.

Lors d'un premier raccordement du tube 7 à l'embout rigide, le tube 7 est introduit à l'intérieur de la bague de cerclage 214, comme symbolisé par la flèche F de la figure 6. Ce tube glisse par sa surface extérieure contre la dent 218, entraînant ainsi la bague fendue 215 en direction de l'épaulement 220 de la cage 216. Comme la surface de contact entre la bague 215 et sa cage 216 est conique, ce déplacement axial est accompagné d'un élargissement de la bague fendue 215 sous l'effet de son élasticité propre, ce qui facilite le passage du tube 7 et évite de marquer la surface extérieure de celui-ci par la dent 218. Après introduction complète du tube 7 à l'intérieur de la pièce femelle du dispositif, tout effort d'extraction du tube 7, symbolisé par la flèche G de la figure 7 et dû à une mise sous pression du tube 7 ou exercé manuellement, entraîne la bague 215 avec le tube 7 par coopération de sa dent 218 avec la surface extérieure de ce tube. Lorsque la cage 216 parvient en butée contre la bague de verrouillage 15, l'extrémité arrondie du cliquet 221 glisse contre le chanfrein de l'épaulement 219 et le cliquet 221 se déforme élastiquement. Lorsque le cliquet 221 dépasse l'épaulement 219, il revient, sous l'effet de son élasticité propre dans sa position libre. En même temps, la surface de contact entre la bague et sa cage étant conique, le déplacement axial de la bague 215 est accompagné d'un resserrement de cette bague, ce qui renforce l'accrochage de la bague 215 sur le tube 7. La bague de cerclage 214 se trouve alors dans une configuration illustrée par la figure 7. Lorsque l'effort d'extraction du tube 7 est interrompu, l'élasticité propre de la bague fendue 215 tend à ramener celle-ci en direction de l'épaulement 220. Mais le cliquet 221 constitue désormais une butée au coulissement axial de la bague 215 dans cette direction, comme cela est illustré par la figure 8. Ainsi, le serrage de la bague fendue 215 sur le tube 7 est maintenu, ce qui permet d'assurer un accrochage sur la bague de cerclage 214 sur le tube 7, même lorsque l'ensemble formé par ces deux éléments est extrait de la pièce femelle 1 du dispositif.

A la figure 9, on a représenté en vue partielle une troisième variante de réalisation de la bague de cerclage. Cette bague est ici désignée par la référence 314 et comporte comme précédemment une bague fendue 315 montée à l'intérieur d'une cage 316, ces deux bagues ayant une surface de contact sensiblement conique. La bague 315 présente un alésage cylindrique 317 équipé de deux dents circulaires 318. En outre, la bague fendue 315 est ici équipée sur sa surface extérieure conique d'une denture 321. De même, la cage 316 est équipée sur sa surface intérieure conique d'une denture 322 qui coopère avec la denture 321 de la bague fendue 315.

Ainsi, après introduction complète du tube 7 à l'intérieur de la pièce femelle 1 du dispositif, tout effort d'extraction de se tube provoque un déplacement axial de la bague fendue 315 à l'intérieur de la cage 316 et donc le resserrement de celle-ci sur le tube. Ce déplacement axial s'opère par glissement relatif de la denture 321 sur la denture 322, de sorte que ce déplacement et donc le serrage de la bague 315 sur le tube sont irréversibles.

L'invention n'est pas limitée aux modes de réalisation qui viennent d'être décrits mais englobe au contraire tout dispositif reprenant les caractéristiques essentielles énoncées dans les revendications.

## Revendications

1. Dispositif de raccordement rapide d'un tube (7) à un embout rigide (2) comportant une pièce femelle (1) solidaire de l'embout rigide (2) et dans laquelle est ménagé un alésage étagé présentant, au-delà d'un verrou axial (15) mobile entre deux positions, une section (13) de grand diamètre, caractérisé en ce qu'il comporte une bague de cerclage (14 ; 114 ; 214 ; 314) logée de manière amovible dans la section (13) de grand diamètre et équipée sur sa surface intérieure d'au moins une aspérité d'accrochage (25; 118 ; 218 ; 318) formant moyen de liaison axiale du tube (7) à la bague de cerclage (14 ; 114 ; 214 ; 314) destinée à mordre la surface extérieure du tube (7) afin de fixer de façon définitive la bague sur le tube, le verrou axial (15) s'opposant de façon directe, dans une de ses deux positions, au déplacement axial de la bague de cerclage (14 ; 114 ; 214 ; 314) en direction opposée à l'embout rigide (2).

2. Dispositif de raccordement rapide selon la revendication 1, caractérisé en ce que la bague de cerclage (14) présente un alésage conique (24) convergent en direction de l'embout rigide (2).

3. Dispositif de raccordement rapide selon la revendication 1, caractérisé en ce que la bague de cerclage (114 ; 214 ; 314) présente un alésage cylindrique (117 ; 217; 317) équipé d'au moins une dent d'ancrage (118 ; 218 ; 318).

4. Dispositif de raccordement rapide selon l'une des revendications précédentes, caractérisé en ce que la bague de cerclage (114 ; 214 ; 314) comporte une bague fendue (115 ; 215 ; 315) montée dans une cage (116 ; 216 ; 316) qui coopère avec la bague fendue (115 ; 215 ; 315) par une surface de contact conique qui diverge en direction de l'embout rigide (2).

5. Dispositif de raccordement rapide selon la revendication 4, caractérisé en ce que la bague de cerclage (214 ; 314) comporte un moyen de verrouillage (221, 219 ; 321, 322) de la bague fendue (215 ; 315) dans au moins une position axiale de cette bague par rapport à la cage (216 ; 316).

6. Dispositif de raccordement rapide selon la revendication 5, caractérisé en ce que le moyen de verrouillage de la bague de cerclage (214) comporte un cliquet (221) solidaire de la bague fendue (215) et qui coopère avec un épaulement intérieur (219) de la cage (216).

7. Dispositif de raccordement rapide selon la revendication 5, caractérisé en ce que le moyen de verrouillage de la bague de cerclage (314) comporte des dentures (321 ; 322) ménagées sur les surfaces en contact des bagues intérieure et extérieure pour coopérer l'une avec l'autre.

## Patentansprüche

1. Schnellverbindungsvorrichtung zum Kuppeln eines Rohres (7) an ein starres Ansatzstück (2), mit einem mit dem starren Ansatzstück (2) verbundenen Buchsenteil (1), in welchem eine stufenförmige Bohrung ausgebildet ist, die jenseits einer zwischen zwei Positionen verstellbaren axialen Sperrvorrichtung (15) einen Bereich (13) mit großem Durchmesser hat, dadurch **gekennzeichnet,** daß sie einen Haltering (14; 114; 214; 314) enthält, der herausnehmbar in dem Bereich (13) mit großem Durchmesser angeordnet ist und an seiner Innenfläche mindestens eine Erhebung zum Festhaken (25; 118; 218; 318) hat, die ein Mittel zum axialen Verbinden des Rohres (7) mit dem Haltering (14; 114; 214; 314) bildet und dazu ausgebildet ist, in die Außenfläche des Rohres (7) einzugreifen, um den Haltering endgültig am Rohr zu fixieren, wobei die axiale Sperrvorrichtung (15) in einer ihrer beiden Positionen unmittelbar der axialen Verschiebung des Halteringes (14; 114; 214; 314) in Richtung vom starren Ansatzstück (2) weg entgegenwirkt und in ihrer anderen Position den Haltering (14; 114; 214; 314) freigibt.

2. Schnellverbindungsvorrichtung nach Anspruch 1, dadurch **gekennzeichnet,** daß der Haltering (14) eine konische Bohrung (24) hat, die sich in Richtung auf das starre Ansatzstück (2) hin verjüngt.

3. Schnellverbindungsvorrichtung nach Anspruch 1, dadurch **gekennzeichnet,** daß der Haltering (114; 214; 314) eine zylindrische Bohrung (117; 217; 317) hat, die mindestens einen Verankerungszacken (118; 218; 318) aufweist.

4. Schnellverbindungsvorrichtung nach einem der vorhergehenden Ansprüche, dadurch **gekennzeichnet,** daß der Haltering (114; 214; 314) einen Spaltring (115; 215; 315) umfaßt, der in einem Gehäuse (116; 216; 316) angeordnet ist, welches mit dem Spaltring (115; 215; 315) mittels einer konischen Kontaktfläche zusammenwirkt, die sich in Richtung auf das starre Ansatzstück (2) erweitert.

5. Schnellverbindungsvorrichtung nach Anspruch 4, dadurch **gekennzeichnet,** daß der Haltering (214; 314) eine Arretiervorrichtung (221, 219; 321, 322) zum Arretieren des Spaltringes (215; 315) in mindestens einer axialen Position des Spaltringes relativ zum Gehäuse (216; 316) hat.

6. Schnellverbindungsvorrichtung nach Anspruch 5, dadurch **gekennzeichnet,** daß die Arretiervorrichtung des Halteringes (214) eine Sperrklinke (221) umfaßt, die mit dem Spaltring (215) verbunden ist und mit einer Innenschulter (219) des Gehäuses (216) zusammenwirkt.

7. Schnellverbindungsvorrichtung nach Anspruch 5, dadurch **gekennzeichnet,** daß die Arretiervorrichtung des Halteringes (314) Zacken (321; 322) umfaßt, die an miteinander in Kontakt stehenden Flächen des inneren und des äußeren Ringes vorgesehen sind, um miteinander in Eingriff zu treten.

## Claims

1. A quick coupling device for coupling a tube (7) to a rigid endpiece (2) including a female part (1) secured to the rigid endpiece (2) and in which a staged bore is provided that presents a section (13) of large diameter beyond an axial latch (15) that is movable between two positions, the device being characterized in that it comprises a banding ring (14; 114; 214; 314) housed in removable manner in the large diameter section (13) and fitted on its inside surface with at least one retaining projection (25; 118; 218; 318) forming axial connection means between the tube (7) and the banding ring (14; 114; 214; 314),said projection being designed to bite into the outside surface of the tube (7), in order to definitely attach the banding ring to the tube the axial latch (15) in one of its two positions directly opposing axial displacement of the banding ring (14; 114; 214; 314) away from the rigid endpiece (2) and, in its other position, releasing the banding ring (14; 114; 214; 314).

2. A quick coupling device according to claim 1, characterized in that the banding ring (14) has a conical bore (24) converging towards the rigid endpiece (2).

3. A quick coupling device according to claim 1, characterized in that the banding ring (114; 214; 314) has a cylindrical bore (117; 217; 317) fitted with at least one anchoring tooth (118; 218; 318).

4. A quick coupling device according to any preceding claim, characterized in that the banding ring (114; 214; 314) comprises a split ring (115; 215; 315) mounted in a cage (116; 216; 316) which co-operates with the split ring (115; 215; 315) via a conical contact surface that diverges towards the rigid endpiece (2).

5. A quick coupling device according to claim 4, characterized in that the banding ring (214; 314) includes means (221, 219; 321, 322) for locking the split ring (215; 315) in at least one of the axial positions of said ring relative to the cage (216; 316).

6. A quick coupling device according to claim 5, characterized in that the means for locking the banding ring (214) comprises a catch (221) secured to the split ring (215) and co-operating with an inside shoulder (219) of the cage (216).

7. A quick coupling device according to claim 5, characterized in that the locking means for locking the banding ring (314) has sets of teeth (321; 322) formed on the containing surfaces of the inner and outer rings to co-operate with each other.
